# EUROPEAN PATENT SPECIFICATION

(11) **EP 1 187 780 B1**
(45) Date of publication and mention of the grant of the patent: **07.09.2005**
(21) Application number: 99964335.6
(22) Date of filing: 14.12.1999
(51) Int. Cl.: B65G 21/20

(54) **CONVEYOR BELT SEALING SYSTEM**
DICHTUNGSSYSTEM FÜR FÖRDERBAND
SYSTEME PERMETTANT D'ETANCHEIFIER UN TRANSPORTEUR A COURROIE

(30) Priority: 24.06.1999 ZA 9904168
(43) Date of publication of application: 20.03.2002
(73) Proprietor: Slic Trading Company Limited, Belize (BZ)
(72) Inventor: BRINK, Jan Louis, Centurion (ZA)
(74) Representative: Solf, Alexander
(86) International application number: PCT/ZA1999/000136
(87) International publication number: WO 2000/078647

(56) References cited:
- FR-A- 2 352 193
- US-A- 5 513 743

## Description

### BACKGROUND OF THE INVENTION

This invention relates to a sealing system for a conveyor belt which is suitable for sealing a gap between a conveyor belt and any other structure through which material from, or destined for, the conveyor belt could escape. Situations of this type arise for example at material transfer points such as where a chute discharges material onto an underlying conveyor belt.

US 5513743 discloses a conveyor belt sealing system according to which a portion of an elongate sealing member is attachable in a track element fixed to a support structure, the portion of the sealing member and the track having interengaging complementary formations to provide a means for securing the sealing member to the support structure. Forces which are exerted on the sealing member can however displace the sealing member.

### SUMMARY OF THE INVENTION

The invention provides a conveyor belt sealing system which includes support structure, a clamping component which opposes a surface of the support structure, and an elongate sealing member which is partly positioned between the clamping component and the surface, and which extends between the support structure and a surface of a conveyor belt, whereby the sealing member and the clamping component have interengaging complementary formations to secure the sealing member in transversal position to the support structure, and the system includes securing means for moving the clamping component towards the surface of the support structure thereby to secure the sealing member in longitudinal position to the support structure.

The formations may have any suitable shape. In one example of the invention the sealing member has an undercut formation and the clamping component means has a flange which is engaged with the undercut formation. The flange may extend towards the said surface of the support structure.

The sealing member as mainly claimed in claims 16 and 19 may be of any appropriate type. The sealing member may for example be relatively flexible and a substantial portion of the sealing member may overlie a corresponding portion of a conveyor belt. The sealing member may include a plurality of grooves which oppose a surface of the conveyor belt.

In the aforementioned embodiment wherein the clamping component means and the sealing member have interengaging complementary formations the sealing member is restricted from being moved in a direction which is transverse to its longitudinal direction. Consequently it is advantageous to provide a plurality of separate sealing surfaces, each of which is formed between an adjacent pair of grooves, on the sealing member. The clamping component means, interacting with the sealing member, consequently for practical purposes allows the sealing member to be moved relatively to the clamping component means only in a longitudinal direction of the sealing member.

On the other hand, according to a different form of the invention, the position of the sealing member is adjustable relatively to a conveyor belt surface at least in a direction which is transverse to a longitudinal direction of the sealing member. With this form of the invention the sealing member will generally have at least one sealing surface in contact with a conveyor belt surface and, as the sealing surface wears, the sealing member is adjustable in a direction which is transverse to its longitudinal direction to compensate for such wear.

The sealing member, with the second form of the invention, is generally more rigid compared to the sealing member in the first form of the invention.

With the second form of the invention the clamping component means may include a member in the form of a plate or angle section which bears against an outer side of the sealing member and which, once released, enables the sealing member to be adjusted in the aforementioned manner, i.e. laterally relatively to its longitudinal direction.

The aforementioned member may bear frictionally against the sealing member.

The sealing member may include complementary tongue and groove formations at opposing ends of the sealing member to enable similar sealing members to be interengaged with one another in a longitudinal sense with butt joints, e.g. tongue and groove joints, being formed between adjacent sealing members.

The securing means may take on any suitable form. Thus the securing means may for example include one or more bolts or studs which extend laterally from the support structure and which are engaged with the clamping component means. Nuts on the studs can be tightened according to requirement to urge the clamping component means into frictional engagement with a portion of the sealing member with the sealing member then being sandwiched between opposing surfaces of the support structure and the clamping component means.

Studs of the securing means may extend directly from the support structure or from a backing plate or similar device which is fixed to the support structure.

In a preferred form of the invention use is made of one or more over-centre or eccentric fastening levers which are movable between open and closed positions. At the open position the force exerted on the clamping component means is released to enable the sealing member to be engaged with the clamping component means or for the position of the sealing member to be adjusted. At the closed position the sealing member is clamped between opposing surfaces of the clamping component means and the support structure.

### BRIEF DESCRIPTION OF THE DRAWINGS

The invention is further described by way of examples with reference to the accompanying drawings in which:
Figure 1 illustrates a sealing system according to one form of the invention,
Figures 2 and 3 respectively illustrate a sealing system according to a second form of the invention in different operational states,
Figure 4 illustrates a sealing arrangement according to another form of the invention
Figures 5 and 6 illustrate another form of the invention again in different operational states respectively, and
Figure 7 is a view in detail illustrating the interconnection of adjacent sealing members in the arrangement of Figure 1 or Figures 2 and 3, Figure 4 or Figures 5 and 6.

### DESCRIPTION OF PREFERRED EMBODIMENTS

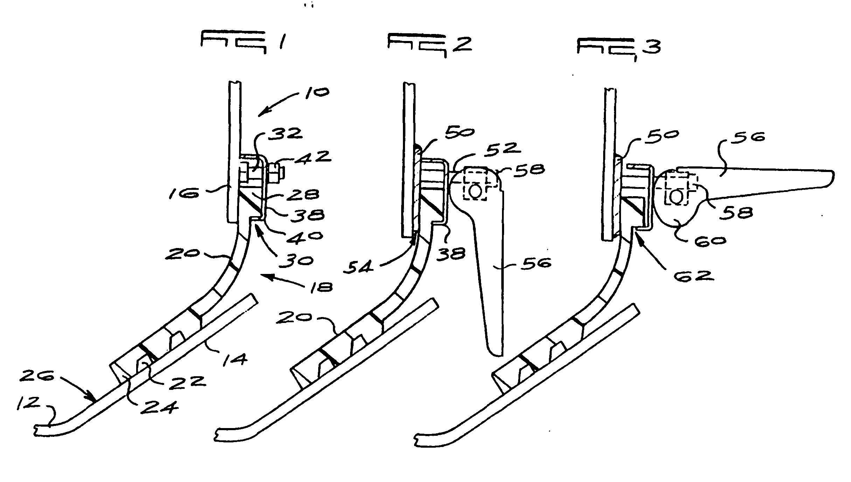

Figure 1 of the accompanying drawings illustrates in cross-section portion of a conveyor belt sealing system 10 according to the invention.

Figure 1 illustrates a portion of a conveyor belt 12 which has an inclined peripheral section 14. Fixed structure 16 e.g. a wall of a discharge chute is positioned above the section 14. In practice the chute is used for discharging material onto the conveyor belt. These aspects are conventional and are not further elaborated on herein.

A gap 18 exists between a lower edge of the structure 16 and an upper edge of the peripheral section 14 and material can escape through this gap. To prevent the escape of material an elongate flexible sealing member 20 is positioned so that it covers the gap. The sealing member is made from rubber and includes a body with a number of grooves 22 in its outer surface which form ribs 24 which bear against an inner surface 26 of the peripheral section 14. An upper end of the member 20 has a longitudinally extending rib 28 of rectangular cross-section which forms an undercut formation 30 which extends in the direction of the ribs 24.

A plurality of studs or bolts 32 are welded to an outer side of the structure 16. A U-shaped channel or track 38 is formed with holes through which the studs pass. The track includes a flange 40 which engages with the undercut formation 30. Nuts 42 are threaded onto the studs 32 and, when tightened, urge the channel towards the structure 16 thereby frictionally locking the rib 28 between opposing surfaces of the clamping channel and the structure 16. The interengagement of the flange with the undercut formation 30 provides a further means of securing the member 20 in position.

The member 20 may be of substantial length, for example of the order of ten metres long. Normally the member is slid into position by moving it in the longitudinal direction. The frictional forces which arise as a consequence may be substantial and it can be very difficult to locate the rib 28 between the structure 16 and the channel 38. The interengagement of the member with the structure can however be facilitated by loosening the nuts 42 so that the channel 38 can be moved away from the structure 16. A bigger gap is then formed between an edge of the flange 40 and the structure 16 and the member 20 can then be moved into position relatively easily.

The ribs 24 provide a plurality of sealing surfaces on a side of the member 20 and it is only necessary to replace the member once substantial wear of the ribs has taken place. It is to be noted that it is not possible to adjust the member 20 in position in a direction which is transverse to a longitudinal direction of the member.

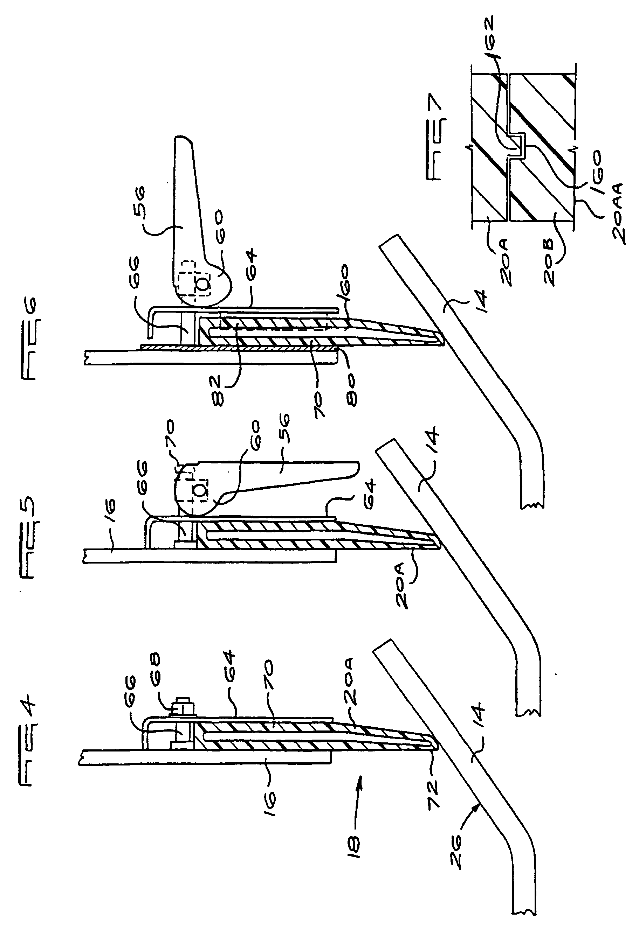

Figures 2 and 3 illustrate, in different operational modes, a variation of the invention. Again use is made of an elongate flexible grooved rubber sealing member 20 which bears on an inclined peripheral section 14 of the conveyor belt. A backing plate 50 which has outwardly projecting studs 52 fixed to it is attached to an outer surface of the structure 16 by means of welding 54.

Each stud has an eccentric or over-centre handle 56 pivotally fixed to it. The position of the handle, relatively to the stud, can be adjusted by means of a nut 58 which is threadedly engaged with an outer portion of the stud.

A channel 38 which is similar to the channel 38 shown in Figure 1 has holes formed in it and the studs 52 pass through the holes.

Figure 3 shows a handle 56 in a relaxed or open state. An eccentric head 60 on the handle is moved away from the structure 16 and consequently the channel 38 is free to move away from the structure 16 to a limited extent. An enlarged gap 62 is thereby formed between an edge of the flange 40 and the structure 16. The sealing member 20 can thus be slid into position, or removed, with relative ease. Once the sealing member is correctly positioned inside the clamping channel 38 each handle 56 is respectively moved to the closed position shown in Figure 2 so that the eccentric head 60 forces the clamping channel towards the structure 16. The rib 28 is thus frictionally locked between opposing surfaces of the backing plate 50 and the clamping channel 38.

In the arrangements shown in Figures 4 to 6 the flexible elongate sealing member 20 of Figures 1 to 3, which is made from a material such as rubber, is replaced by a relatively stiff sealing member 20A which is made from a material such as polyurethane. As the sealing member 20A is relatively inflexible it is not formed with the same substantial length as the sealing member 20. The sealing member 20A is for example of the order of one metre long. Thus a number of the sealing members are required to seal a gap 18 which is relatively long and which is formed between a structure 16 and a surface 26 of a conveyor belt.

The sealing member is tapered over a portion of its width with a reduced thickness sealing surface which bears on the belt. This has been found to enhance effectiveness of the seal.

It is to be noted that components which are shown in Figures 4 to 6 and which are similar to components shown in Figures 1 to 3 are designated with numerals which are similar to the numerals used for the designation of such components in Figures 1 to 3.

Figure 7 illustrates in cross-section, in a direction which is transverse to that shown in Figures 4 to 6, two abutting members 20A and 20AA. Each member is formed with a groove 160 in one end surface and a corresponding tongue 162 in an opposing end surface. This enables adjacent sealing members 20A to be engaged with one another with butt joints being formed between adjacent surfaces.

Referring to Figure 4 a substantial portion of each sealing member 20A is positioned between opposing surfaces of the structure 16 and a clamping plate 64 of angular cross-section. Bolts 66 are welded to an outer surface of the structure 16 and nuts 68, engaged with the bolts, are used to urge the plate 64 towards the structure 16 thereby to clamp an upper portion 70 of each sealing member between the surfaces. A lower edge 72 of the sealing member bears against an upper surface 26 of the belt. The nuts 68 are slackened, when the lower edge 72 is worn, to allow the sealing member to be moved downwardly i.e. in a direction which is transverse to its longitudinal direction. In this way the edge 72 can be brought into contact with the surface 26. Similarly if the member 20A is to be replaced then the nuts 68 are slackened to increase the spacing between the plate 64 and the structure 16. The worn sealing members can then be slid out of position, be moved transversely to their longitudinal direction, and replaced with fresh sealing members according to requirement.

Figure 5 illustrates an arrangement wherein an eccentric handle 56 is mounted to a stud 66 which is welded to the structure 16. The handle, as is the case shown in Figures 2 and 3, includes an eccentric head 60 which bears against an outer surface of the plate 64. In Figure 5 the handle is in a closed position and exerts a clamping force on the plate which frictionally locks the sealing member or skirt 20A in position. A nut 70 which is threadedly engaged with the stud 66 can be adjusted in position so that an adjustable clamping force is exerted by the lever 56 on the blades.

In the arrangement shown in Figure 6 a backing plate 80 is welded to an outer surface of the structure 16. Studs 66, similar to that shown in Figure 5, project from the backing plate and are engaged with respective handles 56. These handles are used in the manner described to adjust the position of the angle plate 64, according to requirement, to enable the sealing members 20A to be adjusted in position or replaced when required.

The sealing members 20A may come in different thicknesses. If the sealing members 20A are relatively thin then it may be difficult to adjust the clamping action so that sufficient force is brought to bear on the portion 70 of the sealing members between the structure 16 and the angle plate. As is indicated by means of a dotted line in Figure 6 a spacer plate 82 may then be secured to an inner surface of the plate 64 to narrow the effective gap which exists between the plate 64 and the structure 16.

A significant benefit of the arrangements shown in Figures 1 to 6 is that the replacement, or adjustment, of the sealing members, as the case may be, is considerably facilitated. This benefit is more pronounced when use is made of clamping levers of the type shown in Figures 2 and 3 and 5 and 6.

## Claims

1. A conveyor belt sealing system which includes support structure (16), a clamping component (38, 64) which opposes a surface of the support structure, and an elongate sealing member (20, 20A) which is party positioned between the clamping component and the surface, and which extends between the support structure and a surface (26) of a conveyor belt (12), **characterised in that** the sealing member and the clamping component have interengaging complementary formations (40, 30) to secure the sealing member in transversal position to the support structure, and that the system includes securing means (42, 56) for moving the clamping component towards the surface of the support structure thereby to secure the sealing member in longitudinal position to the support structure.

2. A sealing system according to claim 1 **characterised** therein that the interengaging complementary formations include an undercut formation (30) on the sealing member and a flange (40) on the clamping component which is engaged with the undercut formation.

3. A sealing system according to claim 2 **characterised** therein that the flange (40) extends towards the surface of the support structure.

4. A sealing system according to claim 1, 2 or 3 **characterised** therein that the sealing member (20, 20A) is flexible and a substantial portion of the sealing member overlies a corresponding portion of the conveyor belt (12).

5. A sealing system according to claim 4, **characterised** therein that the sealing member includes a plurality of grooves (22) which oppose the surface (26) of the conveyor belt.

6. A sealing system according to claim 5 **characterised** therein that the sealing member includes a plurality of separate sealing surfaces (24), each of which is formed between an adjacent pair of grooves.

7. A sealing system according to any one of claims 1 to 6 **characterised** therein that the clamping component allows the sealing member to be moved relatively to the clamping component only in a longitudinal direction of the sealing member.

8. A sealing system according to claim 1 **characterised** therein that the position of the sealing member is adjustable relatively to the surface (26) at least in a direction which is transverse to a longitudinal direction of the sealing member.

9. A sealing system according to claim 1 to 8 **characterised** therein that the sealing member has at least one sealing surface (24) in contact with the surface (26) and, as the sealing surface wears, the sealing member is adjustable in a direction which is transverse to its longitudinal direction to compensate for such wear.

10. A sealing system according to claim 1, 8 or 9 **characterised** therein that the clamping component (38, 64) bears against an outer side of the sealing member and, once released, the securing means enables the sealing member to be moved transversely relatively to a longitudinal direction of the sealing member.

11. A sealing system according to claim 1, 8, 9 or 10 **characterised** therein that the sealing member includes complementary tongue and groove formations (160, 162) at opposing ends of the sealing member to enable similar sealing members to the interengaged with one another in a longitudinal sense with tongue and groove joints being formed between adjacent sealing members.

12. A sealing system according to any one of claims 1 to 11 **characterised** therein that the securing means includes a plurality of stud (32, 52, 66) which extend laterally from the support structure and which are engaged with the clamping component and nuts (42, 58, 68, 70) are engageable with the respective studs to urge the clamping component into frictional engagement with a portion of the sealing member with the sealing member then being sandwiched between opposing surfaces of the support structure and the clamping component.

13. A sealing system according to claim 12 **characterised** therein that the studs extend directly from the support structure or from a backing plate (50, 80) which is fixed to the support structure.

14. A sealing system according to any one of claims 1 to 11 **characterised** therein that the securing means includes a plurality of eccentric fastening levers (56) and each lever is movable between a closed position at which the lever clamps the sealing member between opposing surfaces of the clamping component and the support structure and an open position at which force is exerted by the lever on the clamping component is released to enable the sealing member to be movable between the clamping component and the support structure.

15. A conveyor belt sealing system according to claim 1 **characterised** therein that the securing means includes over-centre fastening means (56) which is movable between an open position at which the sealing member is movable between the clamping component and the support structure and a closed position at which the clamping component is urged towards the support structure thereby to secure the sealing member between the support structure and the clamping component.

16. A sealing member which is suitable for use in the conveyor belt sealing system of any one of claims 1 to 15 and which includes an elongate body (20) with at least one elongate rib (24) which bears against a surface (26) of a conveyor belt (12) **characterised** therein that the body, at opposing ends, has complementary formations (160, 162) to enable similar sealing members to be interengaged with one another in a longitudinal sense with butt joints between adjacent sealing members.

17. A sealing member according to claim 16 **characterised** therein that the sealing member includes at least one elongate undercut formation (30) which extends in the direction of the rib.

18. A sealing member according to claim 16 or 17 **characterised** therein that the body is made from rubber.

19. A sealing member which is suitable for us in a conveyor belt sealing system which includes an elongate body (20A) with a longitudinal edge (72) which bears against a surface (26) of a conveyor belt (12), **characterised** therein that the body, at opposing ends, has complementary formations (160, 162) to enable similar sealing members to be interengaged with one another in a longitudinal sense with butt joints between adjacent sealing members.

20. A sealing member according to claim 19 **characterised** therein that the longitudinal edge is tapered.

21. A sealing member according to claim 19 or 20 **characterised** therein that the body is made from polyurethane.

## Patentansprüche

1. Förderbandabdichtungssystem, aufweisend eine Tragstruktur (16), ein Klemmbestandteil (38, 63), das sich in Gegenüberlage zu einer Oberfläche der Tragstruktur befindet, und ein längliches Dichtungselement (20, 20A), das teilweise zwischen dem Klemmbestandteil und der Oberfläche zu liegen kommt, und das sich zwischen der Tragstruktur und einer Oberfläche (26) eines Förderbands (12) erstreckt, **dadurch gekennzeichnet, dass** das Dichtungselement und das Klemmbestandteil miteinander im Eingriff stehende komplementäre Formationen (40, 30) aufweisen, um das Dichtungselement in einer Transversalstellung an der Tragstruktur festzulegen, und dass das System eine Festlegungseinrichtung (42, 56) zum Bewegen des Klemmbestandteils in Richtung auf die Oberfläche der Tragstruktur umfasst, um **dadurch** das Dichtungselement in seiner Längsstellung gegenüber der Tragstruktur festzulegen.

2. Abdichtungssystem nach Anspruch 1, **dadurch gekennzeichnet, dass** die miteinander im Eingriff stehenden komplementären Formationen eine hinterschnittene Formation (30) auf dem Dichtungselement und einen Flansch (40) auf dem Klemmbestandteil umfassen, das sich mit der unterschnittenen Formation im Eingriff befindet.

3. Abdichtungssystem nach Anspruch 2, **dadurch gekennzeichnet, dass** sich der Flansch (40) in Richtung auf die Oberfläche der Tragstruktur erstreckt.

4. Abdichtungssystem nach Anspruch 1, 2 oder 3, **dadurch gekennzeichnet, dass** das Dichtungselement (20, 20A) flexibel ist und ein gröberer Abschnitt des Dichtungselements über einem entsprechenden Abschnitt des Förderbands (12) zu liegen kommt.

5. Abdichtungssystem nach Anspruch 4, **dadurch gekennzeichnet, dass** das Dichtungselement mehrere Nuten (22) umfasst, die der Oberfläche (26) des Förderbands gegenüberliegen.

6. Abdichtungssystem nach Anspruch 5, **dadurch gekennzeichnet, dass** das Dichtungselement mehrere getrennte Dichtungsflächen (24) umfasst, von denen jede zwischen einem benachbarten Paar von Nuten gebildet ist.

7. Abdichtungssystem nach einem der Ansprüche 1 bis 6, **dadurch gekennzeichnet, dass** das Klemmbestandteil es dem Dichtungselement erlaubt, relativ zu dem Klemmbestandteil ausschließlich in einer Längsrichtung des Dichtungselements bewegt zu werden.

8. Abdichtungssystem nach Anspruch 1, **dadurch gekennzeichnet, dass** die Stellung des Dichtungselements relativ zu der Oberfläche (26) zumindest in einer Richtung einstellbar ist, die quer zur Längsrichtung des Dichtungselements verläuft.

9. Abdichtungssystem nach einem der Ansprüche 1 bis 8, **dadurch gekennzeichnet, dass** das Dichtungselement zumindest eine Dichtungsfläche (24) im Kontakt mit der Oberfläche (26) aufweist, und dass das Dichtungselement, wenn die Dichtungsfläche verschleißt, in einer Richtung einstellbar ist, die quer zu seiner Längsrichtung verläuft, um diesen Verschleiß zu kompensieren.

10. Abdichtungssystem nach Anspruch 1, 8 oder 9, **dadurch gekennzeichnet, dass** das Klemmbestandteil (38, 64) an einer Außenseite des Dichtungselements anliegt, und die Festlegungseinrichtung, sobald sie freigegeben ist, es erlaubt, dass das Dichtungselement quer relativ zu einer Längsrichtung des Dichtungselements bewegt wird.

11. Abdichtungssystem nach Anspruch 1, 8, 9 oder 10, **dadurch gekennzeichnet, dass** das Dichtungselement komplementäre Zungen- und Nutformationen (160, 162) an gegenüberliegenden Enden des Dichtungselements umfasst, um es zu ermöglichen, dass ähnliche Dichtungselemente miteinander in einer Längsrichtung in Eingriff gelangen, wobei Zungen- und Nutverbindungsstellen zwischen benachbarten Dichtungselementen gebildet sind.

12. Abdichtungssystem nach einem der Ansprüche 1 bis 11, **dadurch gekennzeichnet, dass** die Festlegungseinrichtung mehrere Schraubbolzen (32, 52, 66) umfasst, die sich seitlich von der Tragstruktur erstrecken und sich im Eingriff mit dem Klemmbestandteil befinden, und Muttern (42, 58, 68, 70), die mit den jeweiligen Schraubbolzen in Eingriff bringbar sind, um das Klemmbestandteil in Reibungseingriff mit einem Abschnitt des Dichtungselements zu bringen, wobei das Dichtungselement dabei zwischen gegenüberliegenden Oberflächen der Tragstruktur und des Klemmbestandteils zu liegen kommt.

13. Abdichtungssystem nach Anspruch 12, **dadurch gekennzeichnet, dass** sich die Schraubbolzen direkt von der Tragstruktur oder von einer Unterlagenplatte (50, 80) erstrecken, die an der Tragstruktur festgelegt ist.

14. Abdichtungssystem nach einem der Ansprüche 1 bis 11, **dadurch gekennzeichnet, dass** die Festlegungseinrichtung mehrere exzentrische Anbringungshebel (56) umfasst, und wobei jeder Hebel beweglich ist zwischen einer geschlossenen Stellung, in der der Hebel das Dichtungselement zwischen gegenüberliegenden Oberflächen des Klemmbestandteils und der Tragstruktur einklemmt, und einer offenen Stellung, in der eine Kraft, die durch den Hebel auf das Klemmbestandteil ausgeübt wird, freigegeben wird, um das Dichtungselement in die Lage zu versetzen, zwischen dem Klemmbestandteil und der Tragstruktur bewegt zu werden.

15. Förderbandabdichtungssystem nach Anspruch 1, **dadurch gekennzeichnet, dass** die Festlegungseinrichtung eine über einem Zentrum liegende Festlegungseinrichtung (56) umfasst, die zwischen einer offenen Stellung beweglich ist, in der das Dichtungselement zwischen dem Klemmbestandteil und der Tragstruktur beweglich ist, und einer geschlossenen Stellung, in der das Klemmbestandteil in Richtung auf die Tragstruktur gedrängt wird, um **dadurch** das Dichtungselement zwischen der Tragstruktur und dem Klemmbestandteil festzulegen.

16. Abdichtungselement zur Verwendung in einem Förderbandabdichtungssystem nach einem der Ansprüche 1 bis 15, und aufweisend einen länglichen Körper (20) mit zumindest einer länglichen Rippe (24), die an einer Oberfläche (26) des Förderbands (12) anliegt, **dadurch gekennzeichnet, dass** der Körper an gegenüberliegenden Enden komplementäre Formationen (160, 162) aufweist, um ähnliche Dichtungselemente in die Lage zu versetzen, miteinander in einer Längsrichtung in Eingriff zu gelangen mit aneinander stoßenden Verbindungsstellen zwischen benachbarten Dichtungselementen.

17. Abdichtungselement nach Anspruch 16, **dadurch gekennzeichnet, dass** das Dichtungselement zumindest eine längliche hinterschnittene Formation (30) umfasst, die sich in Richtung der Rippe erstreckt.

18. Abdichtungselement nach Anspruch 16 oder 17, **dadurch gekennzeichnet, dass** der Körper aus Gummi hergestellt ist.

19. Abdichtungselement zur Verwendung in einem Förderbandabdichtungssystem, aufweisend einen länglichen Körper (20A) mit einem Längsrand (72), der an einer Oberfläche (26) eines Förderbands (12) anliegt, **dadurch gekennzeichnet, dass** der Körper an gegenüberliegenden Enden komplementäre Formationen (160, 162) aufweist, um ähnliche Dichtungselemente in die Lage zu versetzen, miteinander in einer Längsrichtung in Eingriff zu gelangen mit aneinander stoßenden Verbindungsstellen zwischen benachbarten Dichtungselementen.

20. Abdichtungselement nach Anspruch 19, **dadurch gekennzeichnet, dass** der Längsrand verjüngt verläuft.

21. Abdichtungselement nach Anspruch 19 oder 20, **dadurch gekennzeichnet, dass** der Körper aus Polyurethan hergestellt ist.

## Revendications

1. Système d'étanchéité pour transporteur à courroie qui comprend une structure de support (16), un composant de blocage (38, 64) qui s'oppose à une surface de la structure de support, et un élément d'étanchéité allongé (20, 20A) qui est partiellement positionné entre le composant de blocage et la surface et qui s'étend entre la surface de support et une surface (26) d'un transporteur à courroie (12), **caractérisé en ce que** l'élément d'étanchéité et le composant de blocage ont des formations complémentaires (40, 30) de mise en prise mutuelle pour fixer l'élément d'étanchéité en position transversale sur la structure de support, et **en ce que** le système comprend des moyens de fixation (42, 56) pour déplacer le composant de blocage vers la surface de la structure de support pour fixer ainsi l'élément d'étanchéité dans la position longitudinale sur la structure de support.

2. Système d'étanchéité selon la revendication 1, **caractérisé en ce que** les formations complémentaires de mise en prise mutuelle comprennent une formation de dégagement (30) sur l'élément d'étanchéité et un rebord (40) sur le composant de blocage qui est mis en prise avec la formation de dégagement.

3. Système d'étanchéité selon la revendication 2, **caractérisé en ce que** le rebord (40) s'étend vers la surface de la structure de support.

4. Système d'étanchéité selon la revendication 1, 2 ou 3, **caractérisé en ce que** l'élément d'étanchéité (20, 20A) est flexible et une partie sensible de l'élément d'étanchéité recouvre une partie correspondante du transporteur à courroie (12).

5. Système d'étanchéité selon la revendication 4, **caractérisé en ce que** l'élément d'étanchéité comprend une pluralité de rainures (22) qui s'opposent à la surface (26) du transporteur à courroie.

6. Système d'étanchéité selon la revendication 5, **caractérisé en ce que** l'élément d'étanchéité comprend une pluralité de surfaces d'étanchéité séparées (24), dont chacune est formée entre une paire adjacente de rainures.

7. Système d'étanchéité selon l'une quelconque des revendications 1 à 6, **caractérisé en ce que** le composant de blocage permet de retirer l'élément d'étanchéité par rapport au composant de blocage uniquement dans une direction longitudinale de l'élément d'étanchéité.

8. Système d'étanchéité selon la revendication 1, **caractérisé en ce que** la position de l'élément d'étanchéité est réglable par rapport à la surface (26) au moins dans une direction qui est transversale à une direction longitudinale de l'élément d'étanchéité.

9. Système d'étanchéité selon les revendications 1 à 8, **caractérisé en ce que** l'élément d'étanchéité a au moins une surface d'étanchéité (24) en contact avec la surface (26) et, lorsque la surface d'étanchéité s'use, l'élément d'étanchéité est réglable dans une direction qui est transversale par rapport à la direction longitudinale afin de compenser une telle usure.

10. Système d'étanchéité selon la revendication 1, 8 ou 9, **caractérisé en ce que** le composant de blocage (38, 64) s'appuie contre un côté externe de l'élément d'étanchéité et, une fois libérés, les moyens de fixation permettent de déplacer l'élément d'étanchéité de manière transversale par rapport à une direction longitudinale de l'élément d'étanchéité.

11. Système d'étanchéité selon la revendication 1, 8, 9 ou 10, **caractérisé en ce que** l'élément d'étanchéité comprend des formations de languette et de rainure complémentaires (160, 162) au niveau des extrémités opposées de l'élément d'étanchéité pour permettre à des éléments d'étanchéité similaires d'être mis en prise mutuellement avec un autre élément dans un sens longitudinal avec des assemblages de languette et de rainure qui sont formés entre les éléments d'étanchéité adjacents.

12. Système d'étanchéité selon l'une quelconque des revendications 1 à 11, **caractérisé en ce que** les moyens de fixation comprennent une pluralité de goujons (32, 52, 66) qui s'étendent latéralement à partir de la structure de support et qui sont mis en prise avec le composant de blocage et les écrous (42, 58, 68, 70) peuvent être mis en prise avec les goujons respectifs pour pousser le composant de blocage en mise en prise par frottement avec une partie de l'élément d'étanchéité, avec l'élément d'étanchéité qui est alors pris en sandwich entre les surfaces opposées de la structure de support et du composant de blocage.

13. Système d'étanchéité selon la revendication 12, **caractérisé en ce que** les goujons s'étendent directement à partir de la structure de support ou à partir d'une plaque de renfort (50, 80) qui est fixée sur la structure de support.

14. Système d'étanchéité selon l'une quelconque des revendications 1 à 11, **caractérisé en ce que** les moyens de fixation comprennent une pluralité de leviers de fixation excentriques (56) et chaque levier est mobile entre une position fermée dans laquelle le levier bloque l'élément d'étanchéité entre les surfaces opposées du composant de blocage et la structure de support et une position ouverte dans laquelle la force qui est exercée par le levier sur le composant de blocage est relâchée pour permettre à l'élément d'étanchéité d'être mobile entre le composant de blocage et la structure de support.

15. Système d'étanchéité pour transporteur à courroie selon la revendication 1, **caractérisé en ce que** les moyens de fixation comprennent des moyens de fixation réversibles (56) qui sont mobiles entre une position ouverte dans laquelle l'élément d'étanchéité est mobile entre le composant de blocage et la structure de support et une position fermée dans laquelle le composant de blocage est poussé vers la structure de support pour fixer ainsi l'élément d'étanchéité entre la structure de support et le composant de blocage.

16. Elément d'étanchéité qui est approprié pour être utilisé dans le système d'étanchéité pour transporteur à courroie selon l'une quelconque des revendications 1 à 15 et qui comprend un corps allongé (20) avec au moins une nervure allongée (24) qui s'appuie contre une surface (26) d'un transporteur à courroie (12), **caractérisé en ce que** le corps, au niveau des extrémités opposées, possède des formations complémentaires (160, 162) pour permettre aux éléments d'étanchéité similaires d'être mis en prise mutuellement entre eux dans un sens longitudinal avec des joints bout à bout entre les éléments d'étanchéité adjacents.

17. Elément d'étanchéité selon la revendication 16, **caractérisé en ce que** l'élément d'étanchéité comprend au moins une formation de dégagement allongée (30) qui s'étend dans la direction de la nervure.

18. Elément d'étanchéité selon la revendication 16 ou 17, **caractérisé en ce que** le corps est réalisé à partir de caoutchouc.

19. Elément d'étanchéité qui est approprié pour être utilisé dans un système d'étanchéité pour transporteur à courroie qui comprend un corps allongé (20A) avec un bord longitudinal (72) qui s'appuie contre une surface (26) d'un transporteur à courroie (12), **caractérisé en ce que** le corps, au niveau des extrémités opposées, possède des formations complémentaires (160, 162) pour permettre aux éléments d'étanchéité similaires d'être mis en prise mutuellement entre eux dans un sens longitudinal avec des joints bout à bout entre les éléments d'étanchéité adjacents.

20. Elément d'étanchéité selon la revendication 19, **caractérisé en ce que** le bord longitudinal est progressivement rétréci.

21. Elément d'étanchéité selon la revendication 19 ou 20, **caractérisé en ce que** le corps est réalisé à partir de polyuréthane.
